# EUROPEAN PATENT SPECIFICATION

(11) **EP 0 705 873 B1**
(45) Date of publication and mention of the grant of the patent: **17.03.1999**
(21) Application number: 95114800.6
(22) Date of filing: 20.09.1995
(51) Int. Cl.: C08K 5/37, C08L 27/12

(54) **Fluorine-containing elastomer composition**
Fluorhaltige Elastomermischung
Composition d'élastomère contenant du fluor

(30) Priority: 04.10.1994 JP 266247/94
(43) Date of publication of application: 10.04.1996
(73) Proprietor: Nippon Mektron, Limited, Minato-ku Tokyo (JP)
(72) Inventor: Saito, Satoru, Kitaibaraki city, Ibaraki (JP); Tatsu, Haruyoshi, Hitachi city, Ibaraki (JP); Solomonovich, German Lev, kwartira 303, 113093, Moscow (RU); Romanovich, Polishchuk Valerii, kwartira 23, 111538 Moscow (RU)
(74) Representative: Hansen, Bernd, Dr. Dipl.-Chem.

(56) References cited:
- EP-A- 0 110 420
- EP-A- 0 606 883

## Description

### BACKGROUND OF THE INVENTION

### 1. FIELD OF THE INVENTION

The present invention relates to a fluorine-containing elastomer composition, and more particularly to a cross-linkable composition of fluorine-containing elastomer having cyano groups as cross-linkable groups.

### 2. RELATED PRIOR ART

JP-A-59-109546 discloses a fluorine-containing elastomer composition which comprises a terpolymer of tetrafluoroethylene, perfluoro(methyl vinyl ether) and cyano group-containing (perfluorovinylether) represented by the following general formula:

CF₂ =CF[OCF₂CF(CF₃)]nO(CF₂)mCN

wherein n: 1∼2 and m: 1∼4
and a bis(aminophenyl) compound represented by the following general formula as a cross-linking agent: 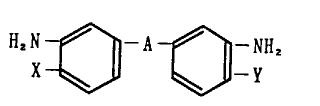 wherein A is an alkylidene group having 1 to 6 carbon atoms, a perfluoroalkylidene group having 1 to 10 carbon atoms, a SO₂ group, an O atom, a CO group or a carbon-carbon bond directly bonding the benzene rings, and X and Y are hydroxyl groups or amino groups. However, such use of bis-(diaminophenyl) compound or bis(aminophenol) compound still has a room for improvement in the compression set.

### SUMMARY OF THE INVENTION

An object of the present invention is to provide a fluorine-containing elastomer composition capable of producing cross-linked fluororubber moldings having an improved compression set, which contains a bis(aminophenyl) compound as a cross-linking agent for a fluorine-containing elastomer having cyano groups as cross-linkable groups.

According to the present invention, there is provided a fluorine-containing elastomer composition, which comprises a terpolymer of tetrafluoroethylene, perfluoro(C1-C5-alkyl vinyl ether) and cross-linkable cyano group-containing (perfluorovinyl ether) and a bis(aminothiophenol) compound represented by the following general formula as a cross-linking agent: 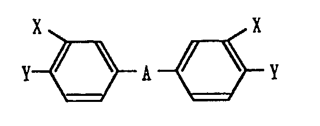 wherein A is an alkylidene group having 1 to 6 carbon atoms, a perfluoroalkylidene group having 1 to 10 carbon atoms, a SO₂ group, an O atom, a CO group or a carbon-carbon bond directly bonding the benzene rings and one of X and Y is an amino group, while the other is a mercapto group.

### DETAILED DESCRIPTION OF THE INVENTION

The terpolymer of tetrafluoroethylene, perfluoro(lower alkyl vinyl ether) and cyano group-containing (perfluorovinylether) for use in the present invention is a copolymer comprising 30 to 70% by mole of tetrafluoroethylene, 65 to 25% by mole of perfluoro(C1-C5-alkyl vinyl ether) and 0.1 to 5% by mole of cyano group-containing (perfluorovinylether) as a cross-linking site comonomer, the sum total of comonomers being 100% by mole.

As the perfluoro(C1-C5-alkyl vinyl ether), perfluoro(methyl vinyl ether) is usually used.

As the cyano group-containing (perfluorovinylether) capable of providing cross-linkable groups in the terpolymer, the following compounds are used:

CF₂=CFO(CF₂)ₙCN (n: 2∼12)

[see: USP 3,546,186 and USP 3,114,778]

CF₂=CFO[CF₂CF(CF₃)O)ₙCF₂CF(CF₃)CN (n: 0∼4)

[see: USP 3,852,326 and USP 3,933,767]

CF₂=CFO[CF₂CF(CF₃)O]ₘ(CF₂)ₙCN (n: 1∼4 and m: 1∼2)

[see: USP 4,138,426 and USP 4,281,092]

The terpolymer can be further copolymerized with various fluoroolefins or vinyl compounds in such a degree as not to inhibit the copolymerization reaction and deteriorate physical properties of vulcanized products, for example, not more than 20% by mole on the basis of the terpolymer. Fluoroolefins for use in the present invention include, for example, vinylidene fluoride, monofluoroethylene, trifluoroethylene, trifluoropropylene, pentafluoropropylene, hexafluoropropylene, hexafluoroisobutylene, chlorotrifluoroethylene and dichlorodifluoroethylene. Vinyl compounds for use in the present invention include, for example, ethylene, propylene, 1-butene, isobutylene, methyl vinyl ether, ethyl vinyl ether, butyl vinyl ether, cyclohexyl vinyl ether, vinyl acetate, vinyl propionate, vinyl chloride, vinylidene chloride and trifluorostyrene.

0. 5 to 5 parts by weight, preferably about 1 to about 2 parts by weight, of bis(aminothiophenol) compound represented by the foregoing general formula is added to 100 parts by weight of the terpolymer.

The fluorine-containing elastomer composition comprising the above-mentioned components as essential ones can further contain an inorganic filler such as carbon black and silica, an acid acceptor such as oxide, hydroxide or stearate of a divalent metal and litharge, a vulcanization aid such as crown ether, quaternary ammonium salt and quaternary phosphonium salt, and other additives, as desired. The composition can be prepared by kneading in rolls, kneader, Bambury mixer. Cross-linking of the composition is carried out by heating at about 160 to about 250°C for about 10 to about 60 minutes. Secondary vulcanization, when desired, is preferably carried out at about 150 to about 280°C for not more than about 30 hours in an inert atmosphere such as a nitrogen atmosphere.

By using a bis(aminothiophenol) compound as a cross-linking agent for a fluorine-containing elastomer having cyano groups as cross-linkable groups, a fluorine-containing elastomer composition capable of producing cross-linked moldings having a largely improved compression set.

### PREFERRED EMBODIMENTS OF THE INVENTION

The present invention will be described in detail below, referring to Examples.

### REFERENCE EXAMPLE 1

200ml of distilled water, 2.5g of ammonium perfluorooctanoate and 4.4g of Na₂HPO₄·12H₂O were charged into a stainless steel autoclave having a net capacity of 500ml, and then the inside gas was replaced with a nitrogen gas. Then the autoclave was subjected to pressure reduction and cooled to about -50°C. Then the following compounds were successively charged into the autoclave:

| | |
|---|---|
| Perfluoro(5-cyanopentyl vinyl ether) [FCVE] | 6.4g |
| Perfluoro(methyl vinyl ether) [FMVE] | 68g |
| Tetrafluoroethylene [TFE] | 32g |

After heating the autoclave to 80°C, 25ml each of aqueous solutions cantaining 0.75g of sodium sulfite and 3.75g of ammonium persulfate, respectively, were charged into the autoclave to initiate polymerization reaction. After the polymerization reaction was continued for 20 hours, unreacted gases were purged from the autoclave and the resulting aqueous latex was taken out of the autoclave, salted out with an aqueous 10% sodium chloride solution and dried, whereby 44g of white rubbery terpolymer A was obtained.

It was found by ultrared absorption analysis that the terpolymer A had a copolymer composition of 62.0% by mole of TFE, 37.0% by mole of FMVE and 1.0% by mole of FCVE (characteristic absorption of nitrile groups: 2268cm⁻¹).

### REFERENCE EXAMPLE 2

Polymerization reaction was carried out in the same manner as in Reference Example 1 except that 9.1g of perfluoro(8-cyano-3,7-dioxanonene-1) [CNVE] was used in place of FCVE, whereby 35g of white rubbery terpolymer B was obtained. The terpolymer B had a copolymer composition of 61.0% by mole of TFE, 38.2% by mole of FMVE and 0.8% by mole of CNVE.

### EXAMPLES 1 TO 2 AND COMPARATIVE EXAMPLES 1 TO 2

The following components were kneaded in a double roll rubber mill and then subjected to primary vulcanization at 160 °C for 30 minutes and secondary vulcanization at 230°C for 22 hours in a nitrogen gas atmosphere:

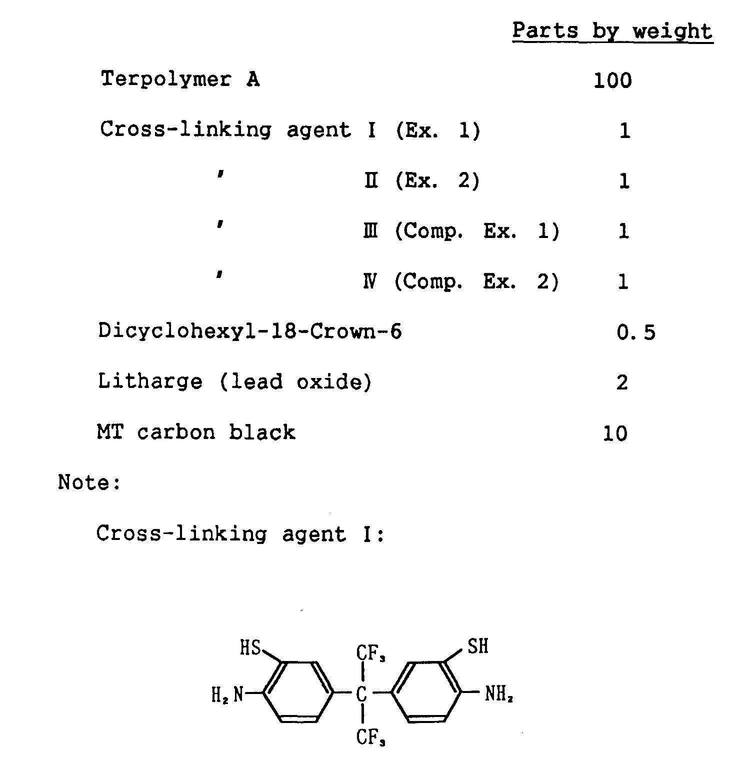

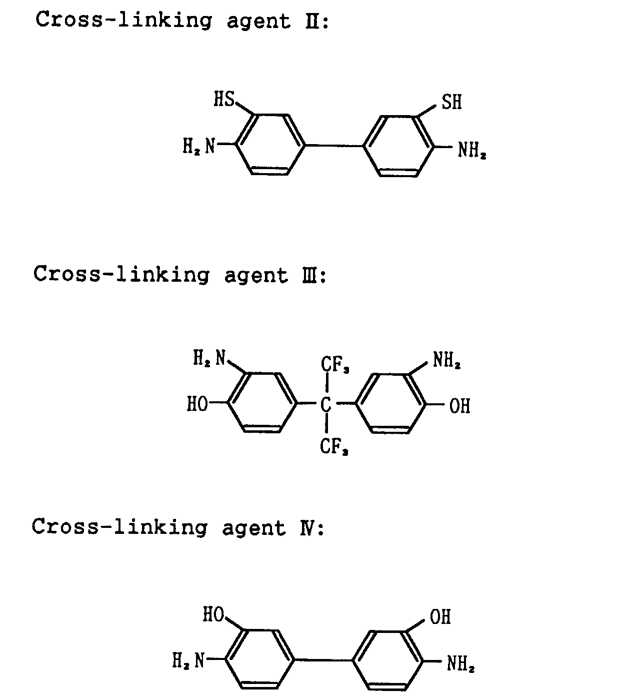

### EXAMPLES 3 TO 4 AND COMPARATIVE EXAMPLES 3 TO 4

Operations were carried out in the same manner as in Examples 1 to 2 and Comparative Examples 1 to 2, except that the terpolymer B was used in place of the terpolymer A.

Normal state physical properties of the vulcanized products obtained in Examples 1 to 4 and Comparative Examples 1 to 4 were measured according to JIS K-6301 and compression sets of O-rings thereof were determined. Results are shown in the following Table.

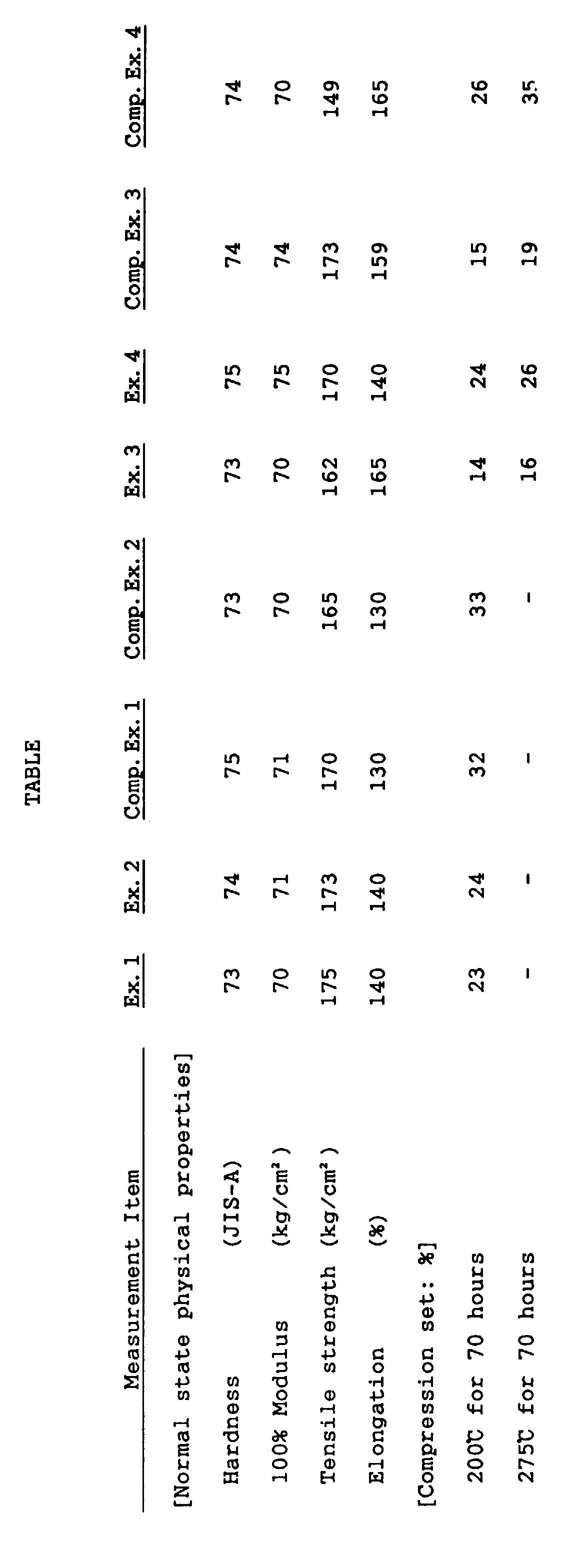

## Claims

1. A fluorine-containing elastomer composition, which comprises a terpolymer of tetrafluoroethylene, perfluoro(C1-C5-alkyl vinyl ether) and cross-linkable cyano group-containing (perfluorovinylether), and a bis (aminothiophenol) compound represented by the following general formula as a cross-linking agent: 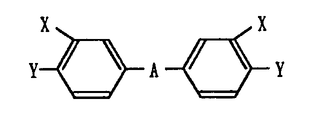 wherein A is an alkylidene group having 1 to 6 carbon atoms, a perfluoroalkylidene group having 1 to 10 carbon atoms, a SO₂ group, an O atom, a CO group or a carbon-carbon bond directly bonding the benzene rings and one of X and Y is an amino group, while the other is a mercapto group.

2. A fluorine-containing elastomer composition according to Claim 1, wherein the terpolymer is a copolymer comprising 30 to 70% by mole of tetrafluoroethylene, 65 to 25% by mole of perfluoro (C1-C5-alkyl vinyl ether) and 0.1 to 5% by mole of cyano group-containing (perfluorovinylether), the sum total of comonomers being 100% by mole.

3. A fluorine-containing elastomer composition according to Claim 1, wherein the terpolymer contains not more than 20% by mole of other fluoroolefin or other vinyl compound on the basis of the terpolymer.

4. A fluorine-containing elastomer composition according to Claim 1, wherein the bis(aminothiophenol) compound is: 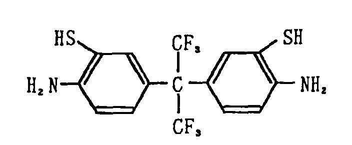 , or

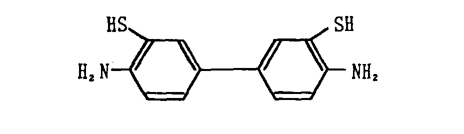

5. A fluorine-containing elastomer composition according to Claims 1, wherein 0.5 to 5 parts by weight of the bis(aminothiophenol) compound is used per 100 parts by weight of the terpolymer.

## Patentansprüche

1. Fluor-enthaltende Elastomerzusammensetzung, die ein Terpolymer aus Tetrafluorethylen, Perfluor-(C₁-C₅-alkylvinylether) und einem vernetzbaren eine Cyangruppe enthaltenden Perfluorvinylether, und eine Bis(aminochiophenol)-Verbindung der folgenden allgemeinen Formel als Vernetzungsmittel umfaßt: 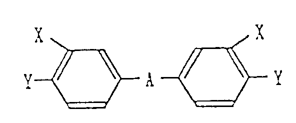 worin A eine Alkylidengruppe mit 1 bis 6 Kohlenstoffatomen, eine Perfluoralkylidengruppe mit 1 bis 10 Kohlenstoffatomen, eine SO₂-Gruppe, ein O-Atom, eine CO-Gruppe oder eine Kohlenstoff-Kohlenstoff-Bindung ist, die die Benzolringe direkt verbindet,
und einer der Reste X und Y eine Aminogruppe ist, während der andere eine Mercaptogruppe ist.

2. Fluor-enthaltende Elastomerzusammensetzung nach Anspruch 1, dadurch gekennzeichnet, daß das Terpolymer ein Copolymer ist, das 30 bis 70 Mol-% Tetrafluorethylen, 65 bis 25 Mol-% Perfluor-(C₁-C₅-alkylvinylether) und 0,1 bis 5 Mol-% des eine Cyangruppe enthaltenden Perfluorvinylethers umfaßt, wobei die Gesamtsumme der Comonomeren 100 Mol-% beträgt.

3. Fluor-enthaltende Elastomerzusammensetzung nach Anspruch 1, dadurch gekennzeichnet, daß das Terpolymer nicht mehr als 20 Mol-%, bezogen auf das Terpolymer, andere Fluorolefine oder andere Vinylverbindungen enthält.

4. Fluor-enthaltende Elastomerzusammensetzung nach Anspruch 1, dadurch gekennzeichnet, daß die Bis(aminothiophenol)-Verbindung ist: 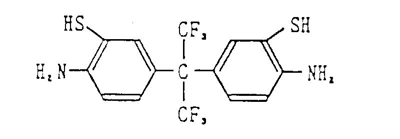 oder

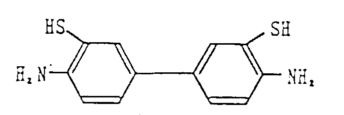

5. Fluor-enthaltende Elastomerzusammensetzung nach Anspruch 1, dadurch gekennzeichnet, daß 0,5 bis 5 Gewichtsteile der Bis(aminothiophenol)-Verbindung pro 100 Gewichtsteile Terpolymer verwendet werden.

## Revendications

1. Composition élastomère contenant du fluor, qui comprend un terpolymère de tétrafluoroéthylène, de perfluoro(éther d'alkyle en C1-C5 et de vinyle) et de (perfluorovinyléther) contenant in groupe cyano réticulable, et un composé de bis (aminothiophénol) représenté par la formule générale en tant qu'agent de réticulation: 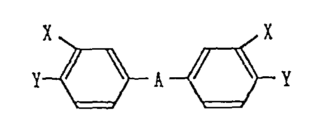 dans laquelle A est un groupe alkylidène présentant 1 à 6 atomes de carbone, un groupe perfluoroalkylidène présentant 1 à 10 atomes de carbone, un groupe SO₂, un atome de O, un groupe CO ou une liaison carbone-carbone liant directement les cycles benzène, et l'un parmi X et Y est un groupe amino, tandis que l'autre est un groupe mercapto.

2. Composition élastomère contenant du fluor selon la revendication 1, dans laquelle le terpolymère est un copolymère comprenant 30 à 70% en mole de tétrafluoroéthylène, 65 à 25% en mole de perfluoro(éther d'alkyle en C1-C5 et de vinyle) et 0,1 à 5% en mole de (perfluorovinyléther) contenant un groupe cyano, la somme totale des monomères faisant 100% en mole.

3. Composition élastomère contenant du fluor selon la revendication 1, dans laquelle le terpolymère ne contient pas plus de 20% en mole d'une autre fluoro-oléfine ou d'un autre composé de vinyle sur base du terpolymère.

4. Composition élastomère contenant du fluor selon la revendication 1, dans laquelle le composé de bis (aminothiophénol) est: 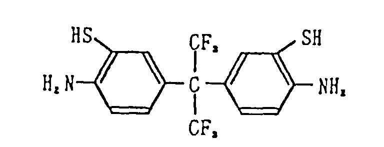 , ou

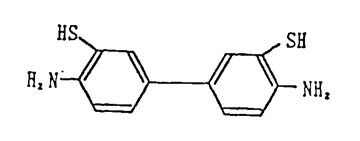

5. Composition élastomère contenant du fluor selon la revendication 1, dans laquelle 0,5 à 5 parties en masse du composé de bis(aminothiophénol) sont utilisées pour 100 parties en masse du terpolymère.
